# EUROPEAN PATENT SPECIFICATION

(11) **EP 1 486 679 B1**
(45) Date of publication and mention of the grant of the patent: **29.03.2006**
(21) Application number: 04102325.0
(22) Date of filing: 26.05.2004
(51) Int. Cl.: F04D 29/62, H02K 5/22

(54) **Lantern bracket in close coupled pumps and guard for said lantern.**
Antriebslaterne in Blockpumpen und Schutzverkleidung fur diese Laterne
Lanterne de raccordement en pompes monobloc et protection pour ledit lanterne

(30) Priority: 13.06.2003 IT VI20030116
(43) Date of publication of application: 15.12.2004
(73) Proprietor: CALPEDA S.p.A., I-36050 Montorso Vicentino (VI) (IT)
(72) Inventor: SERAFIN, Carlo, 36100, VICENZA (IT)
(74) Representative: Bonini, Ercole

(56) References cited:
- DE-A- 2 733 990
- DE-A- 3 641 478
- DE-C- 478 278

## Description

The present invention is about a motor-pump lantern bracket in close coupled pumps, according to the preamble of claim 1, suitable in particular for single impeller centrifugal pumps constructed with axial suction pump bodies, according to the European norm No. EN 733 (End-suction centrifugal pumps, rating with 10 bar) and derived others, such as the close coupled pumps having the usually called "in-line" pump body, with horizontal or vertical suction and delivery ports of the same diameter and disposed on the same axis, to be inserted in a rectilinear pipe.

The lantern bracket in a close coupled pump is used to align and rigidly connect the structural motor parts with the pump.

In a series of pumps like that according to the above mentioned norm, in the close coupled construction each pump requires different lantern brackets having the same flange to be coupled with motors of different power and/or of different rotation speed.

Each motor requires different lantern brackets having the same shield to be coupled with pumps of different size.

The lantern brackets of the type considered hereby generally have two side openings, for visual and manual accessibility to the internal part and to the shaft, in the portion comprised between the front motor wall and the pump wall containing the seal on said shaft.

Said openings are useful to control possible leakage from the seal during test and to inspect the pump in operative condition, after installation in the plant.

Any hole provided with a cap, or an air valve, or to put in communication for other purposes the shaft sealing chamber with the outside, can be accessible through said openings.

In some of the cast lantern brackets of known type, said openings are made on conic surfaces obtained by joining two cores, so that the raw pieces have sharp edges on the openings profile, only partially removable with expensive deburring operations.

For accident prevention, to avoid the contact with the rotating shaft, these openings are closed with guards.

This device usually requires two pieces shaped by press, designed according to the openings profile, each of them fixed with two screws inserted in threaded holes made in the lantern bracket; it is thus necessary to manually make four holes, having different directions, in the assembling stage.

In a series of pump-motor units having different sizes, the manufacture of guards with size and shape adapted to the openings profile requires a certain number of pieces with different size and shape, obtained with several pressing equipments.

Other embodiments, providing for the application of guards with elastic joints in the openings, without using screws, are not in conformity with the standards about safety requirements, which prescribe that the guards should be removed with tools only

Lantern brackets without incorporated shield are also known, manufactured with a flange for the connection to a flanged shield of a standard motor, with a guard of perforated sheet wrapped around the circumference of a cylindrical seat and fixed with one or two screws on threaded holes made in the lantern bracket.

In the production of mass-produced pumps, like that of the type considered hereby, even a single threaded hole is fairly expensive to perform in course of manufacture, in a transversal position with respect to the holes axis and to the other machining operations on the frontal parts of the lantern bracket.

Other protective coverings, made with a band of perforated sheet curved in the form of a cylindrical mantle, like for instance that of the embodiment disclosed in German Patent no 2733990 have their ends bent outwardly at a right angle. In this embodiment, the mantle is clamped with tightening of the two bent ends by means of two boits with nut

*DE 478 278 discloses a covering sheet consisting of an elastic ring for covering the openings present in correspondence of the brushes of an electric motor.*

*DE 36 41 478 discloses a support frame for a turbo engine consisting of a flange and footing elements arranged on both sides of the longitudinal axis of the case.*

These embodiments, besides involving the cost of said bendings and the inconvenience of the presence of outwardly protruding sharp edges, also require different guards, with shorter or longer development according to the different application diameters.

The present invention intends to overcome the aforesaid inconveniences.

It is an object of the present invention to provide for a lantern bracket with built- in motor shield, combined with its guard, where the lantern bracket can be cast with a single core.

It is another object of the invention to obtain an easy to manufacture single piece guard, without a profile shaped by press and without bendings at the ends.

It is a further object of the invention to obtain a guard without sharp or outwardly protruding edges, which may cause injuries to persons in case of incautious contact.

Still another object of the invention is to obtain a guard which is fixable with a single screw, without needing threaded holes on the lantern bracket and without any machining on the guard seat.

Not the last object of the invention is to obtain that the same guard is applicable on lantern brackets of different diameter.

The above mentioned objects, and others which will be better highlighted in the following description, are attained by an embodiment of the lantern bracket obtained according to claim 1.

A structure of the lantern bracket's outer walls which carries out an embodiment of the guard in the form of a plate band wrapped around the circumference of a cylindrical seat.

Preferably, the guard is obtained from a commercial perforated sheet with square holes, having maximum thickness of 1 mm.

With said thickness, the guard can be manually wrapped around the lantern bracket, without needing to be pre-formed in a die.

The guard is indirectly fixed to the lantern bracket by joining the two ends of said band. These two ends can be radially joined and fixed together with any known fixing means removable with a tool.

Preferably, fixing of the guard takes place by using a caged square nut of known type for metal sheet works, applied in a hole on one end and with a screw, and with an interposed washer if necessary, on the other end.

The guard can also be obtained from a perforated sheet with oblong holes in the direction of the guard development around the circumference of its seat on the lantern bracket, to better compensate dimensional displacements in the junction of the fixing points at the ends.

In mass-production, for a faster assembly and a safer adhesion of the guard on the lantern bracket, it is preferable to have a constant position of the fixing points in the meshes or holes to be joined, and to choose the diameter of the seat on the lantern bracket according to the distance between said fixing points and thus to the guard development, considering its thickness and the possible dimensional tolerances.

The objects of the invention can also be obtained with a guard made of a not perforated sheet, with two holes only for the fixing at the ends.

The embodiment with perforated sheet is preferable, because it is already prepared to be fixed and it is more flexible for being adherently applied on its seat on the lantern bracket, and because it allows the visual control of the seal on the shaft, leaving the guard mounted on the working pump.

Advantageously, the guard is manufactured in a single piece, without parts shaped by press, bendings at the ends and outwardly protruding sharp edges, and it is fixed with a single screw without making threaded holes on the lantern bracket.

Still advantageously, the lantern bracket has smooth and uniform outer surfaces, obtained by core, and an application surface for the guard which is substantially cylindrical, with a dimensional uniformity able to ensure the development adaptation of the guard to the lantern bracket's diameter, without edges to be deburred on the openings profiles and without any machining on the guard seat.

In a still advantageous way, the outer surface of the shield, joined to the outer surface of the guard, prevents from the contact with protruding edges and avoids the guard itself to be the cause of accidents or injuries to persons in case of an incautious contact with sharp parts, for instance sliding a hand during cleaning operations.

Furthermore advantageously, the guard fixing and removal takes place by screwing and/or unscrewing a single screw between the two joined ends, and displacements of the guard itself are prevented without threaded holes on the lantern bracket.

Radial displacements are prevented by the annular shape of the guard, angular or rotational displacements of said guard are limited by the fixing means housing on the lantern bracket, and axial displacements are limited by the stops formed by the shield shape on the motor side and by the flange on the pump side.

The extended adherence surfaces on the whole circumference prevent displacements during transportation, or vibrations of the guard on the lantern bracket during operation.

A further advantage is that the same guard can be used with lantern brackets of different diameter, practically by increasing the length of the ends overlapping on the shortest diameter, by just overlapping the two outermost meshes of the perforated protective band on the greatest diameter, and a greater number of meshes on lower diameters.

The aforesaid objects and advantages will be better highlighted in the description of different embodiments of the invention, with reference to the figures of the annexed drawings, wherein:
- Figure 1 shows a lateral view of a close coupled pump with the lantern bracket of the invention;
- Figure 2 shows a lateral view of the lantern bracket without guard;
- Figure 3 shows a lateral view of the lantern bracket with guard applied;
- Figure 4 shows a perspective view of the lantern bracket without guard;
- Figure 5 shows a perspective view of the guard in plane configuration before being wound on the lantern bracket (continuous lines) and in curved configuration after being wound on the lantern bracket (dotted lines);
- Figure 6 shows a perspective view of the lantern bracket with guard applied;
- Figure 7 shows an exploded view of a detail of the guard fixing at the ends;
- Figure 8 shows a cross sectional view of a detail of the guard fixing at the ends;
- Figure 9 shows a longitudinal sectional view of a detail of the guard and its seat on the lantern bracket;
- Figure 10 shows a different executive embodiment with respect to Figure 4;
- Figure 11 shows a different executive embodiment with respect to Figure 5; and
- Figure 12 shows a different executive embodiment with respect to Figure 6.

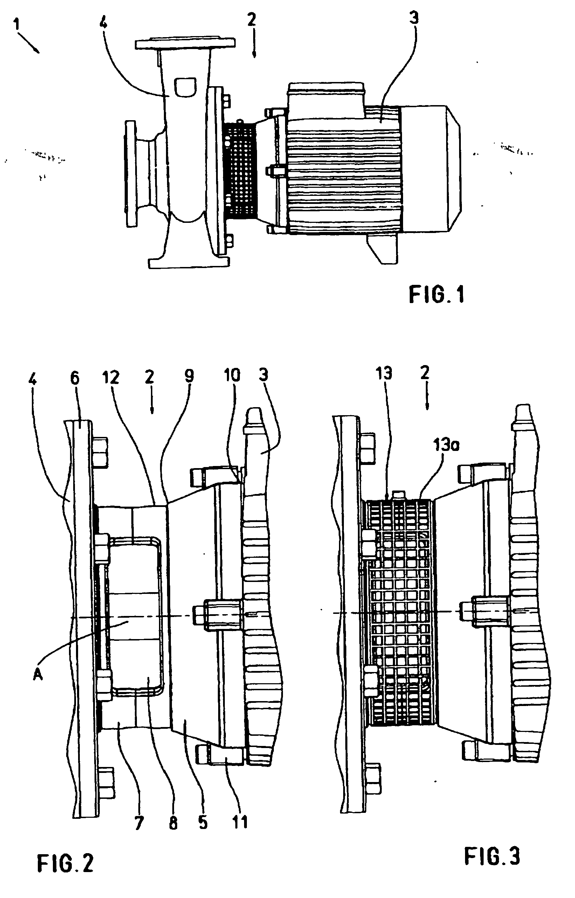

In Figure 1, the close coupled pump is generally indicated with numeral **1,** the lantern bracket of the invention is generally indicated with numeral **2,** the motor is indicated with numeral **3** and the pump with numeral **4.**

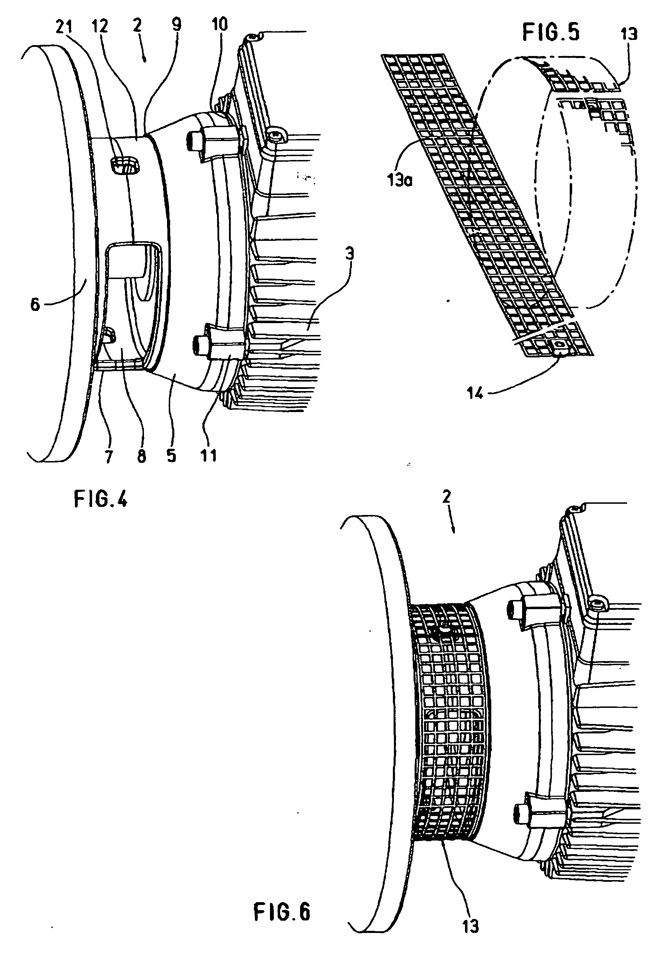

As clearly shown in Figures 2 and **4,** the lantern bracket **2** comprises, assembled in a single piece, a shield **5** to be connected with screws to the motor **3,** a flange **6** to be connected with screws to the pump **4** and at least two connection arms **7** between said shield **5** and said flange **6.**

At least two openings **8** are furthermore present between said shield **5** and said flange **6,** for the visual and manual accessibility to the internal part of the lantern bracket **2** and the shaft **A,** in the portion comprised between the front motor wall (not visible in the drawings) and the pump wall containing the seal on said shaft (not visible in the drawings).

The shield **5** comprises the seat for connection to the motor casing and the bearing seat on the pump side of the shaft (not visible in the drawings).

The lantern bracket **2** can be removably coupled to the pump body cover (not visible in the drawings), or else it can also be made integral with said pump body cover.

The shield **5** has an outer surface of conoidal shape, with the lesser diameter **9** on said arms **7** and said openings **8** side, and the greater diameter **10** around said connection seat to the motor **3** casing, with radially protruding appendixes **11** provided with holes for the connecting screws to the motor casing.

Said outer surface of conoidal shape can also have a substantially frustum conical profile, with the lesser diameter **9** on said arms **7** and said openings **8** side, and the greater diameter **10** joined to a substantially cylindrical portion, or else said conoidal shape can have a profile with a continuous curvature from said lesser diameter **9** to said greater diameter **10.**

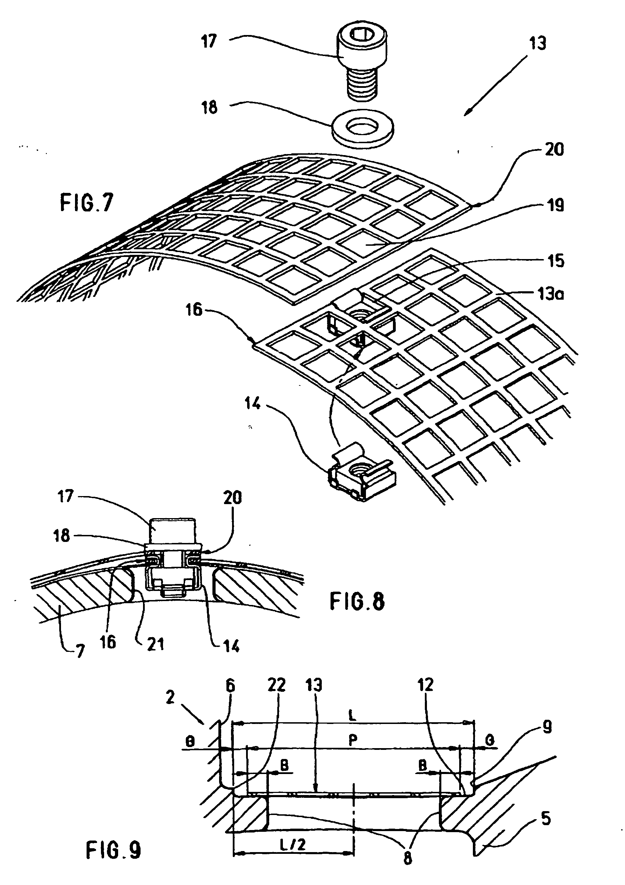

As also shown in Figure 9, the lantern bracket 2 has a substantially cylindrical outer surface **12,** of constant length **L** in the rotation axis direction, disposed between said shield **5** and said flange **6,** around said arms **7** and the lateral edges **B** of said openings **8.**

The lantern bracket **2** is prearranged for the application of a removable guard **13** against the contact with the rotating shaft **A,** wound on the whole circumference of said substantially cylindrical outer surface **12,** around said arms **7** and the lateral edges **B** of said openings **8.**

The lantern bracket is provided for the single core sand casting, with outer surfaces, arms and openings formed with said core.

This allows the necessary shape and dimensional uniformity of the guard seat, around said arms **7** and the lateral edges **B** of said openings **8,** on the whole circumference and length **L,** with tolerances able to ensure the development adaptation of the guard to the lantern bracket's diameter, without edges to be deburred on the openings profiles and without any machining on the guard seat.

As shown in Figure 9, to ensure a uniform adhesion of the guard **13** on the lantern bracket **2,** the mold division is performed on a plane perpendicular to the rotation axis, disposed inside the guard seat, preferably in the middle L/2 or in the central portion of said length **L,** with core drafts of about one degree, so that the outer surface **12,** on which said guard **13** is wound, is substantially cylindrical, with the same maximum diameter on both sides of said seat L and the minimum diameter on the mold division.

As shown in Figures 3, 5, 6 and 11, according to a preferred executive embodiment, the guard **13** consists in a perforated sheet band **13a,** preferably with square holes and with maximum thickness of 1 mm, wound for more than 360 degrees around said substantially cylindrical outer surface **12,** said arms **7** and the lateral edges **B** of said openings **8.**

The guard **13** is indirectly fixed to the lantern bracket, being applied by the junction of the two ends **16, 20** of its development, overlapping in the portion greater than 360 degrees, fixed together one upon the other with a fixing means removable with a tool.

As shown in Figures 5, 7, 8 and 11, according to a preferred executive embodiment, the guard **13** is fixed with a caged square nut **14,** of known type, tongued applied in a hole **15** of the perforated sheet **13a** on the internal wall of the internal end **16,** and with a screw **17,** with an interposed washer **18** if necessary, outwardly inserted through a hole **19** of the perforated sheet on the end **20** overlapping the internal end **16.**

The arms **7** have an opening **21** for housing the square nut **14.** The angular displacements of the guard **13,** with its overlapping ends **16** and **20** mutually fixed inwardly with the square nut **14** and outwardly with the screw **16,** are limited by the clearance between the square nut **14** and the opening **21** for housing said nut in one of the connection arms **7.**

As shown in Figure 9, the axial displacements of the guard **13** on the lantern bracket 2 are limited by the clearance **G** between the length **L** of the guard **13** seat and the width **P** of said guard **13,** said clearance **G** being lower than the width of said lateral edges **B** of the openings covered by the guard.

Said seat length **L** is limited on motor side by a rise formed by said lesser diameter **9** of said conoidal shaped outer surface of the shield **5.**

Said length **L** is limited on pump side by a rise **22,** or more angularly spaced rises, preferably having diameter corresponding to said lesser diameter **9** of said outer surface of the shield, or by a junction between said substantially cylindrical surface **12** and the surface of the flange **6** on which said rises are supported.

In the lantern brackets having flanges of greater diameter, the bearing surface of the screws on the flange **6** can be more advanced or more retracted with respect to the limit of the guard **13** seat **L,** on pump side, with said substantially cylindrical surface **12** joined to said flange **6** with a conic wall.

Preferably, said lesser diameter **9** of said shield **5** outer surface is provided for being equal or greater than the external diameter of the guard **13,** in order to join said shield outer surface to the guard **13** outer surface, without protruding edges, at least on the greater part of the circumference but even in said portion of junction with the two overlapping guard ends.

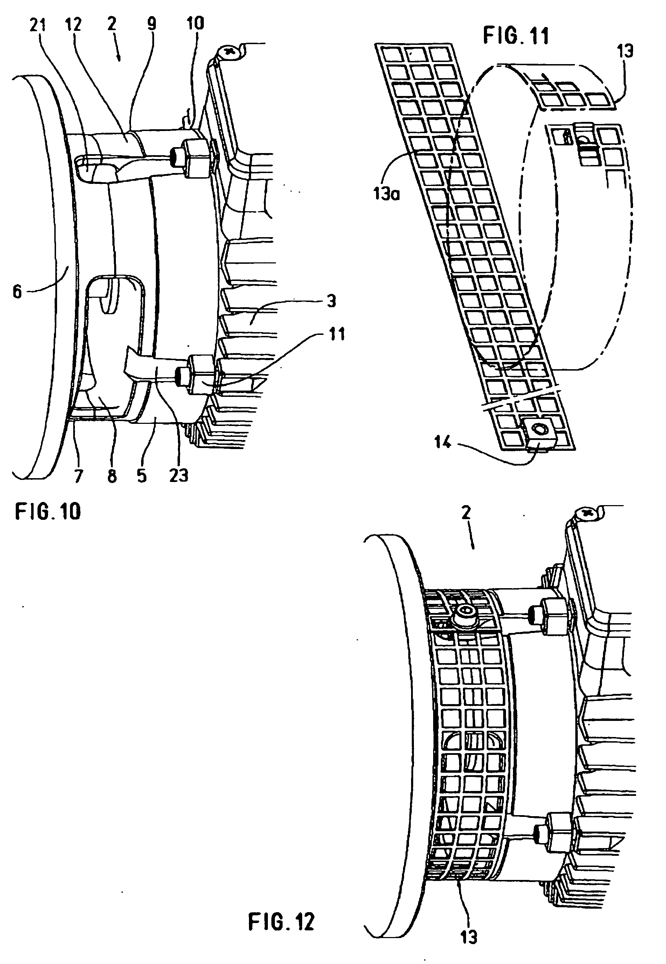

As shown in Figures 10 and 12, the shield **5** outer surface can be made with a very low conicity for the core casting, with a very low difference between the greater diameter **10** and the lesser diameter **9** and with lesser diameter **9** substantially coincident with the guard outer diameter.

In this embodiment, the shield **5** outer surface can have some recesses **23,** at the radially protruding appendixes **11,** for the connecting screws to the motor casing.

Said recesses **23** interrupt on motor side the circular continuity of said substantially cylindrical outer surface **12** around said arms and around the lateral edges of the openings **8** and **21.**

## Claims

1. A motor-pump lantern bracket (2) in a close coupled centrifugal pump comprising, integrally formed in a single piece, a shield (5) connected with screws to the motor (3), a flange (6) connected with screws to the pump (4) and at least two connection arms (7) between said shield and said flange with at least two openings (8) for the visual and manual accessibility to the internal part and to the shaft (A) in the portion comprised between the front motor wall and the pump wall containing the seal on said shaft, with these openings (8) closed by a removable guard (13) against the contact with the rotating shaft, said shield having a conoidal shaped outer surface with radially protruding appendixes (11) provided with holes for the connecting screws to the motor casing, **characterized in that**:
- said lantern bracket (2) has a substantially cylindrical outer surface (12) disposed around said arms (7) and the lateral edges (B) of said openings (8), and between the lesser diameter (9) of said outer surface of the shield (5) and the flange (6);
- said guard (13) is wound on the whole circumference of said substantially cylindrical outer surface, around said arms (7) and said lateral edges of said openings, said guard (13) being applied to said lantern bracket (2) by the junction of its two ends (16, 20), overlapping on said circumference for a portion greater than 360 degrees, fixed together one upon the other with fixing means removable with a tool;
- said lesser diameter (9) of said outer surface of the shield (5) is equal or greater than the external diameter of said guard (13).

2. The lantern bracket (2) according to claim 1), **characterized by** further comprising in a single piece the cover of the pump body.

3. The lantern bracket (2) according to claim 1), **characterized in that** said guard (13) consists in a perforated sheet band (13a) wound for more than 360 degrees around said arms (7) and said lateral edges of said openings (8), with its development ends (16, 20) overlapping in the portion greater than 360 degrees, said ends (16, 20) being fixed together with a caged nut (14) tongued applied in a hole (15) of said perforated sheet (13a) present at one of said ends (16), and with a screw (17) outwardly inserted through a hole (19) of said perforated sheet (13a) present at the other end (20).

4. The lantern bracket (2) according to claim 3), **characterized in that** said arms (7) have an opening (21) for housing said caged nut (14) and the angular displacements of said guard (13) are limited by the clearance present between said caged nut (14) and said opening (21).

5. The lantern bracket (2) according to claim 1), **characterized in that** the axial clearance (G), present between the width (P) of said guard (13) and the width (L) of the seat in which it is housed comprised between said shield (5) and said flange (6), is lower than the width of said lateral edges (B) of said openings (8) covered by said guard (13).

6. The lantern bracket (2) according to claim 1), **characterized by** being cast and having the mold division plane perpendicular to the rotation axis, disposed inside the length (L) in the rotation axis direction, of said substantially cylindrical outer surface (12), with said outer surfaces (5, 12), said arms (7) and said openings (8) cast with a single core.

7. The lantern bracket (2) according to claim 1), **characterized in that** said substantially cylindrical outer surface (12) has the same maximum diameter on both sides of said seat (L) and the minimum diameter on the mold division.

8. The lantern bracket (2) according to claim 1), **characterized in that** said outer surface (12) of said shield (5) is made with a very low conicity for the core casting, with a very low difference between the greater diameter (10) and the lesser diameter (9), with said lesser diameter substantially coinciding with the guard outer diameter.

9. The lantern bracket (2) according to claim 1), **characterized in that** said outer surface (12) of said shield (5) has recesses (23), at said radially protruding appendixes (11), which interrupt, on motor side, the circular continuity of said substantially cylindrical outer surface (12) around said arms (7) and around said lateral edges (B) of said openings (8).

## Patentansprüche

1. Eine Motorpumpen-Antriebslaterne (2) in einer geschlossenen, angekuppelten Schleuderpumpe, die ganz aus einem einzigen Teil geformt, Folgendes umfasst: eine am Motor (3) angeschraubte Abschirmung (5), einen an der Pumpe (4) angeschraubten Flansch (6) und wenigstens zwei Verbindungsarme (7) zwischen der Abschirmung und dem Flansch mit wenigstens zwei Öffnungen (8) für die Einsicht und den manuellen Zugang zum inneren Teil sowie zur Welle (A) in dem Bereich zwischen der vorderen Motorwand und der Pumpenwand, die die Wellendichtung enthält, wobei die Öffnungen (8) durch eine abnehmbare Schutzabdeckung (13) gegen den Kontakt mit der drehenden Welle verschlossen sind und die Abschirmung eine konisch geformte Außenfläche mit radial herausragenden Aufsatzstücken (11) mit Löchern für die Verbindungsschrauben am Motorgehäuse aufweist, **dadurch gekennzeichnet, dass**:
- die Antriebslaterne (2) eine im Wesentlichen zylindrische Außenfläche (12) aufweist, die um die Arme (7) und die Seitenkanten (B) der Öffnungen (8) sowie zwischen dem kleineren Durchmesser (9) der Außenfläche der Abschirmung (5) und dem Flansch (6) positioniert ist;
- die Schutzabdeckung (13) um den gesamten Umfang der im Wesentlichen zylindrischen Außenfläche gewunden ist, um die Arme (7) und die Seitenkanten der Öffnungen, wobei die Schutzabdeckung (13) an der Antriebslaterne (2) angebracht ist durch Verbindung ihrer beiden Enden (16, 20) mit Überlappung am Umfang über eine Strecke von mehr als 360 Grad und Fixierung eines Endes über dem anderen durch mit einem Werkzeug entfembare Befestigungsmittel;
- der kleinere Durchmesser (9) der Außenfläche der Abschirmung (5) gleich oder größer ist als der Außendurchmesser der Abschirmung (13).

2. Die Antriebslaterne (2) gemäß Patentanspruch 1), **dadurch gekennzeichnet, dass** sie des Weiteren in einem einzigen Teil den Deckel des Pumpenkörpers umfasst.

3. Die Antriebslaterne (2) gemäß Patentanspruch 1), **dadurch gekennzeichnet, dass** die Abschirmung (13) aus einem gelochten Blechband (13a) besteht, das um mehr als 360 Grad um die Arme (7) und die Seitenkanten der Öffnungen (8) gewunden ist und dessen Enden (16, 20) sich in dem über 360 Grad hinausgehenden Bereich überlappen, wobei diese Enden (16, 20) zusammengefügt sind mit einer Einrast-Käfigmutter (14), die in einem Loch (15) des Lochblechs (13a) an einem der Enden (16) positioniert ist sowie mit einer Schraube (17), die am anderen Ende (20) durch ein Loch (19) des Lochblechs (13a) nach außen durchgesteckt ist.

4. Die Antriebslaterne (2) gemäß Patentanspruch 3), **dadurch gekennzeichnet, dass** die Arme (7) eine Öffnung (21) aufweisen zur Aufnahme der Käfigmutter (14) und dass die Winkelverschiebungen der Abschirmung (13) begrenzt sind auf den Zwischenraum zwischen der Käfigmutter (14) und der Öffnung (21).

5. Die Antriebslaterne (2) gemäß Patentanspruch 1), **dadurch gekennzeichnet, dass** der axiale Zwischenraum (G) zwischen der Breite (P) der Schutzabdeckung (13) und der Breite (L) der Aufnahme zwischen der Abschirmung (5) und dem Flansch (6), in der sich die Schutzabdeckung (13) befindet, niedriger ist als die Breite der Seitenkanten (B) der Öffnungen (8), die durch die Schutzabdeckung (13) abgedeckt sind.

6. Die Antriebslaterne (2) gemäß Patentanspruch 1), **dadurch gekennzeichnet, dass** sie gegossen ist und die Ebene der Gießformteilung lotrecht zur Drehachse hat, angeordnet in Drehachsenrichtung innerhalb der Länge (L) der im Wesentlichen zylindrischen Außenfläche (12), wobei die Außenflächen (5, 12), die Arme (7) und die Öffnungen (8) mit einem Gusskem gegossen sind.

7. Die Antriebslaterne (2) gemäß Patentanspruch 1), **dadurch gekennzeichnet, dass** die im Wesentlichen zylindrische Außenfläche (12) an beiden Seiten des Sitzes (L) den gleichen, größten Durchmesser und an der Gießformteilung den kleinsten Durchmesser hat.

8. Die Antriebslaterne (2) gemäß Patentanspruch 1), **dadurch gekennzeichnet, dass** die Außenfläche (12) der Abschirmung (5) für den Kernguss mit sehr geringer Konizität ausgeführt ist, mit einer sehr geringen Differenz zwischen dem größeren Durchmesser (10) und dem kleinsten Durchmesser (9), wobei der kleinere Durchmesser im Wesentlichen mit dem Außendurchmesser der Schutzabdeckung übereinstimmt.

9. Die Antriebslaterne (2) gemäß Patentanspruch 1), **dadurch gekennzeichnet, dass** die Außenfläche (12) der Abschirmung (5) Vertiefungen (23) an den radial herausragenden Aufsatzstücken (11) aufweist, die an der Motorseite die kreisförmige Kontinuität der im Wesentlichen zylindrischen Außenfläche (12) um die Arme (7) und um die Seitenkanten (B) der Öffnungen (8) unterbrechen.

## Revendications

1. Une lanterne de raccordement (2) d'une motopompe dans une pompe centrifuge monobloc comprenant un écran (5), réalisé entièrement d'une seule pièce, relié à l'aide de vis au moteur (3), un flasque (6) relié à l'aide de vis à la pompe (4) et au moins deux bras de connexion (7) entre ledit écran et ledit flasque avec au moins deux ouvertures (8) pour un accès visuel et manuel à la partie interne et à l'arbre (A) dans la partie comprise entre la paroi avant du moteur et la paroi de la pompe comportant le joint d'étanchéité sur ledit arbre, avec lesdites ouvertures (8) fermées au moyen d'une protection amovible (13) contre le contact avec l'arbre tournant, ledit écran ayant une surface extérieure conoïde avec des appendices qui saillent d'une manière radiale (11) munies de trous pour relier les vis de connexion à la carcasse de moteur, **caractérisée en ce que**:
- ladite lanterne de raccordement (2) a une surface extérieure essentiellement cylindrique (12) disposée autour desdits bras (7) et des bords latéraux (B) desdites ouvertures (8), et entre le diamètre inférieur (9) de ladite surface extérieure de l'écran (5) et du flasque (6);
- ladite protection (13) est enroulée sur toute la circonférence de ladite surface extérieure essentiellement cylindrique, autour desdits bras (7) et , desdits bords latéraux desdites ouvertures, ladite protection (13) étant appliquée sur ladite lanterne de raccordement (2) grâce à la jonction de ses deux extrémités (16, 20), débordant sur ladite circonférence pour une partie plus grande de 360 degrés, fixées ensemble l'une sur l'autre à l'aide de moyens de fixation détachables avec un outil;
- ledit diamètre inférieur (9) de ladite surface extérieure dudit écran (5) est égal ou plus grand que le diamètre extérieur de ladite protection (13).

2. La lanterne de raccordement (2) selon la revendication 1), **caractérisée en ce qu'**elle comprend également d'une seule pièce le carter du boîtier de pompe.

3. La lanterne de raccordement (2) selon la revendication 1), **caractérisée en ce que** ladite protection (13) consiste en une bande de tôle perforée (13a) enroulée pour plus de 360 degrés autour desdits bras (7) et desdits bords latéraux desdites ouvertures (8), avec ses extrémités de développement (16, 20) débordant dans la partie plus grande de 360 degrés, lesdites extrémités (16, 20) étant fixées ensemble à l'aide d'un écrou à cage (14) appliqué à emboîtement dans un trou (15) de ladite tôle perforée (13a) se trouvant sur une desdites extrémités (16), et à l'aide d'une vis (17) insérée de l'extérieur à travers un trou (19) de ladite tôle perforée (13a) se trouvant sur l'autre extrémité (20).

4. La lanterne de raccordement (2) selon la revendication 3), **caractérisée en ce que** lesdits bras (7) ont une ouverture (21) pour loger ledit écrou à cage (14) et les déplacements angulaires de ladite protection (13) sont limités par l'espace mort présent entre ledit écrou à cage (14) et ladite ouverture (21).

5. La lanterne de raccordement (2) selon la revendication 1), **caractérisée en ce que** l'espace mort axial (G), présent entre la largeur (P) de ladite protection (13) et la largeur (L) du siège compris entre ledit écran (5) et ledit flasque (6) dans lequel ladite protection est logée, est inférieur à la largeur desdits bords latéraux (B) desdites ouvertures (8) couvertes par ladite protection (13).

6. La lanterne de raccordement (2) selon la revendication 1), **caractérisée en ce qu'**elle est coulée et a le plan de division du moule perpendiculaire à l'axe de rotation, disposé dans la longueur (L) dans la direction de l'axe de rotation, de ladite surface extérieure essentiellement cylindrique (12), avec lesdites surfaces extérieures (5, 12), lesdits bras (7) et lesdites ouvertures (8) coulés avec un noyau unique.

7. La lanterne de raccordement (2) selon la revendication 1), **caractérisée en ce que** ladite surface extérieure essentiellement cylindrique (12) a le même diamètre maximal sur les deux côtés dudit siège (L) et le diamètre minimal sur le point de division du moule.

8. La lanterne de raccordement (2) selon la revendication 1), **caractérisée en ce que** ladite surface extérieure (12) dudit écran (5) est réalisée avec une conicité très basse pour le moulage du noyau, avec une différence minimale entre le diamètre supérieur (10) et le diamètre inférieur (9), avec ledit diamètre inférieur coïncidant essentiellement avec le diamètre extérieur de la protection.

9. La lanterne de raccordement (2) selon la revendication 1), **caractérisée en ce que** ladite surface extérieure (12) dudit écran (5) a des cavités (23), sur lesdites appendices qui saillent d'une manière radiale (11), qui interrompent, sur le côté du moteur, la continuité circulaire de ladite surface extérieure essentiellement cylindrique (12) autour desdits bras (7) et autour desdits bords latéraux (B) desdites ouvertures (8).
